**Europäisches Patentamt**

**European Patent Office**

**Office européen des brevets**

(19)

(11) Veröffentlichungsnummer: **0 019 782 A2**

(12) EUROPÄISCHE PATENTANMELDUNG

(21) Anmeldenummer: 80102600.6

(22) Anmeldetag: 10.05.80

(51) Int. Cl.³: **F 16 B 13/00**, F 16 B 13/12

(30) Priorität: **31.05.79 DE 2922126**

(43) Veröffentlichungstag der Anmeldung: 10.12.80
Patentblatt 80/25

(84) Benannte Vertragsstaaten: **AT BE CH FR IT LI NL**

(71) Anmelder: **Albert Berner GmbH & Co KG,
Postfach 65 Daimlerstrasse 35, D-7118 Künzelsau (DE)**

(72) Erfinder: **Fischer, Kuno, Klebweg 5, D-7118 Künzelsau
(DE)**
Erfinder: **Runge, Erich, Zollstockweg 50,
D-7118 Künzelsau (DE)**

(74) Vertreter: **Bunke, Max, Dipl.-Ing. Dipl.-Ing. Max Bunke
Dipl.-Chem. Dr. H. Bunke et al, Dipl.-Phys. H. Degwert
Patentanwälte Postfach 1186 Lessingstrasse 9,
D-7000Stuttgart 1 (DE)**

(54) Metallhülsendübel.

(57) Die Erfindung betrifft einen Metallhülsendübel für Abstandsmontage, mit einer geschlitzten Metallhülse und einem in diese hineinziehbaren Spreizkeil. Dabei ist gemäss der Erfindung die Stirnfläche des Spreizkeils abgeschrägt und an dem Spreizkeil ist eine Haltenase angebracht, für die in der Metallhülse eine Aussparung vorgesehen ist; durch das Eingreifen der Nase in die Aussparung ist der Spreizkeil unverlierbar in der Hülse gehalten. Das Aufliegen der Haltenase in der Aussparung ermöglicht es auch, den Dübel störungsfrei in ein Loch einzuschlagen. Wegen der abgeschrägten Stirnfläche lässt sich die Nase leicht in die Aussparung einkippen. Weiterbildungen der Erfindung liegen u.a. darin, dass die Aussparung zwecks Erzielung eines Vorhubes höher ist als die Nase und dass aus dem Hülsenmantel eine Drehsperr-Zunge ausgeschnitten ist, die beim Vorschub ausgespreizt wird.

Anmelderin:
Albert Berner GmbH & Co.KG
Daimlerstr. 35, Postfach 65
7118 Künzelsau

Vertreter:
Patentanwälte
Dipl.-Ing.Max Bunke
Dipl.-Chem.Dr.H.Bunke
Dipl.-Phys.H.Degwert
Lessingstr. 9, Postfach 1186
7000 Stuttgart 1

Stuttgart, den 10.5.1980
P 2533 Euro

## Metallhülsendübel

Die Erfindung betrifft einen Metallhülsendübel für Abstandsmontage, nämlich zum Halten einer Wandung eines zu befestigenden Körpers in einem Abstand von der Oberfläche eines tragenden
Körpers, insbesondere zum Befestigen von Tür- oder Fensterrahmen auf Mauerwerk, bestehend aus einer Metallhülse aus federndem Material, die einen durchgehenden Längsschlitz und an mindestens einem ihrer Enden einen diesem Längsschlitz diametral
gegenüberliegenden, vom Hülsenende über einen Teil der Hülsenlänge sich erstreckenden zweiten Schlitz aufweist, einem an dem
einen Ende in die Hülse einzusetzenden, sich mit zwei einander gegenüberliegenden, dem Hülsenumfang angepaßten Rippen in den Längsschlitzen der Hülse führenden, mit einer Gewindebohrung versehen, im wesentlichen kegelstumpfförmigem Spreizkeil mit in die Hülse passendem zylindrischen Halsansatz und einem in diesen einzuschraubenden Gewindebolzen mit Senkschraubenkopf.

Derartige Dübel sind in im einzelnen verschiedenen Ausführungen, insbesondere in verschiedenen Längenabmessungen auf dem Markt.

Bei den bekannten Metallhülsendübeln stellte der Spreizkeil, gleichgültig, ob er aus Metall oder aus Kunststoff hergestellt war, einen besonderen, verlierbaren Bauteil dar, der nur dadurch mit den übrigen Bauteilen zusammengehalten werden konnte, daß auch bei unbenutztem Dübel der Schraubenbolzen ein wenig in ihn eingeschraubt war.

Da bei den bekannten Dübeln der einen besonderen Bauteil darstellende Spreizkeil mittels des Schraubenbolzens gegenüber der Hülse in beiden Richtungen verschiebbar war, war es beim Einschlagen des ganzen Dübels durch Schläge auf den Kopf des Schraubenbolzens möglich, daß die Hülse der Schlagbewegung nicht vollständig folgte, so daß der Bolzenkopf mit seiner Versenkungsschräge das rückwärtige Ende der Hülse aufweitete und in dem Loch, durch das die Hülse hindurchgesteckt war, festklemmte. Wenn andererseits das Loch reichlich bemessen war und die Hülse locker saß, kam es bei den bekannten Dübeln vor, daß bei dem Versuch, den Schraubenbolzen festzuziehen, die Hülse, in welcher der Innengewinde tragende Spreizkörper axial geführt ist, sich mitdrehte, weil der Spreizkeil zwar durch seine Führungsrippen gegen Drehung gegenüber der Hülse gehalten war, die Hülse selbst aber keine gegenüber dem Loch, in das sie eingesteckt war, wirkende Drehsicherung aufwies.

Der Erfindung liegt die Aufgabe zugrunde, diese bei der Montage von Metallhülsendübeln auftretenden Schwierigkeiten zu vermeiden.

Die Lösung dieser Aufgabe liegt gemäß der Erfindung darin, daß die Stirnfläche des zylindrischen Halses des Spreizkeils abgeschrägt ist, daß an der Stelle der so gebildeten größten Halslänge eine Haltenase aus der Halsfläche herausragend angebracht ist, und daß in dem den Hals des Spreizkeils aufnehmenden Ende der Metallhülse eine die Haltenase aufnehmende Aussparung vorgesehen ist.

Durch das Eingreifen der Haltenase in die in der Metallhülse vorgesehene Aussparung ist der Spreizkeil unverlierbar in der Metallhülse gehalten; er kann nur unter elastischem Aufbiegen der Metallhülse wieder aus ihr entfernt werden. Selbst wenn der Gewindebolzen aus dem Spreizkeil herausgedreht wird, kann der Spreizkeil also nicht verloren gehen. Das Aufliegen der Haltenase in der Aussparung in Richtung des Einsteckens des Dübels ermöglicht auch dessen Einschlagen in ein z.B. im Mauerwerk angebrachtes Loch, wobei mit dem Hammer auf den Kopf des Gewindebolzens geschlagen wird. Die Kraft wird von dem Bolzen auf den Spreizkeil und von diesem über die Haltenase auf die Hülse übertragen, so daß diese beim Einschlagen des Dübels nicht zurückbleiben kann und keine Relativbewegung des Senkschraubenkopfes des Gewindebolzens gegenüber der Hülse stattfinden kann, die zu einem Aufweiten und Festklemmen des rückwärtigen Dübelendes führen könnte. Dadurch, daß der Spreizkeil am Halsende abgeschrägt ist, seine rückwärtige Stirnfläche also geneigt verläuft, wird das Einbringen der Haltenase in die Aussparung der Hülse wesentlich erleichtert; der Spreizkeil läßt sich dadurch bei nur geringer elastischer Aufweitung der Hülse aus einer Stellung, in der die Haltenase bereits vor der Aussparung liegt, in die Hülse vollends einkippen, wonach die Haltenase vollständig in die Aussparung eingreift und der Hals von der

0019782

Hülse, die aus dem leicht elastisch aufgeweiteten Zustand wieder zurückfederte, umschlossen ist.

Gemäß einer Weiterbildung der Erfindung ist die in der Hülse vorgesehene Aussparung für die Haltenase höher als die letztere und der zylindrische Hals des Spreizkeils ragt bei dessen äußerster Lage um mindestens den Betrag aus der Hülse heraus, um den die Aussparung höher ist als die Haltenase. Hierdurch ist die Möglichkeit eines in Richtung des Eintretens des Spreizkeiles in die Hülse verlaufenden Anfangshubes geschaffen, währenddessen die Spreizkegelfläche des Spreizkeiles sich noch außerhalb des Hülseneinganges befindet, die Hülse also noch nicht spreizt. Dieser Vorhub wird, wie unten näher erläutert, bei Beginn des Anziehens des Gewindebolzens zur Betätigung einer in der Hülse angeordneten Drehsperr-Zunge ausgenutzt. Demgemäß liegt eine Weiterbildung der Erfindung auch darin, daß auf der dem durchgehenden Schlitz gegenüberliegenden Seite der Hülse aus deren Mantel an ihrem Vorderende eine ausspreizbare Drehsperr-Zunge ausgeschnitten ist, die innerhalb des dem durchgehenden Schlitz gegenüberliegenden kurzen Schlitzes liegt und deren rückwärtiges Ende mit dem Mantel der Hülse aus einem Stück besteht, während ihr Vorderende bis vor den Hals des Spreizkeiles reicht, wenn sich dieser in seiner durch das Anliegen der Haltenase auf der in der Aussparung gebildeten Auflagefläche bestimmten äußersten Stellung befindet. Zweckmäßig ist die Drehsperr-Zunge in das Innere der Hülse bis zum Übergreifen der Stirnfläche des Halses des Spreizkeils bei dessen äußerster Stellung eingebogen, so daß das Ausspreizen dieser Drehsperr-Zunge unmittelbar bei Beginn der Axialbewegung des Spreizkeils beginnt. Der Vorteil der Drehsperr-Zunge liegt darin, daß bei Beginn des Anziehens des Gewindebolzens die Hülse nicht mehr gegen Mitdrehen von Hand gehalten zu werden braucht, was bei kleinen Abständen z.B. zwischen einem Fensterrahmen und dem Mauerwerk oft nicht möglich war.

Während der wie beschrieben ermöglichte Vorhub des Spreizkeils ohne Spreizung der Hülse durch seine Spreizkegelfläche nur zur Betätigung der Drehsperr-Zunge dient, wird bei dem weiteren, dann nicht mehr durch Mitdrehen der Hülse behinderten Einschrauben des Gewindebolzens der Spreizkeil weiter in die Hülse hineingezogen, so daß er die Hülse spreizt und am ganzen Umfang festklemmt. Zur Unterstützung dieser Wirkung des Haupthubes des Spreizkeiles dienen noch zwei weitere, bei dem gezeichneten Ausführungsbeispiel verwirklichte Maßnahmen. Die die Haltenase aufnehmende Aussparung liegt in dem durchgehenden Längsschlitz der Hülse und ist an ihrem rückwärtigen Ende, wo sie in diesen übergeht, durch Schrägflächen begrenzt, deren Neigung derjenigen von Dreiecksseiten der Haltenase entspricht. Somit ist die Haltenase bei weiterem Einziehen des Spreizkeiles zum zusätzlichen Auseinanderdrücken der beiderseits des durchgehenden Längsschlitzes der Hülse befindlichen Hülsenmantelteile benutzt. Damit das Auseinanderdrücken des Hülsenmantels durch den Spreizkegel und durch die Haltenase sich zuverlässig über eine möglichst große Länge der Metallhülse auswirkt, ist diese durch Längseinprägungen versteift, die einander in einer Ebene gegenüberliegen, welche die durch den durchgehenden Schlitz und die Hülsenlängsachse gelegte Ebene in dieser Achse senkrecht schneidet. Es wird dadurch möglich, den Dübel auch noch in Löchern sicher zu verankern, die größer sind, als sie dem Nenndurchmesser des Dübels entsprechend sein sollten. Das ist besonders dann vorteilhaft, wenn der Dübel in porigem Material geringerer Festigkeit oder in Hohlblocksteinen befestigt werden muß.

Sonstige Einzelheiten ergeben sich aus der folgenden Beschreibung der Zeichnung in Verbindung mit den Unteransprüchen.

Die Zeichnung zeigt ein Ausführungsbeispiel, und zwar ist

Fig. 1 eine Ansicht des Dübels mit in seiner äußersten Stellung befindlichem Spreizkörper und darin eingeschraubtem Gewindebolzen von der dem Längsschlitz gegenüberliegenden Seite ゴer Fülse,

Fig. 2 eine der Fig. 1 entsprechende Ansicht von der entgegengesetzten, den Eingriff der Haltenase zeigenden Seite und

Fig. 3 ein Längsschnitt in einer zur Zeichenebene der

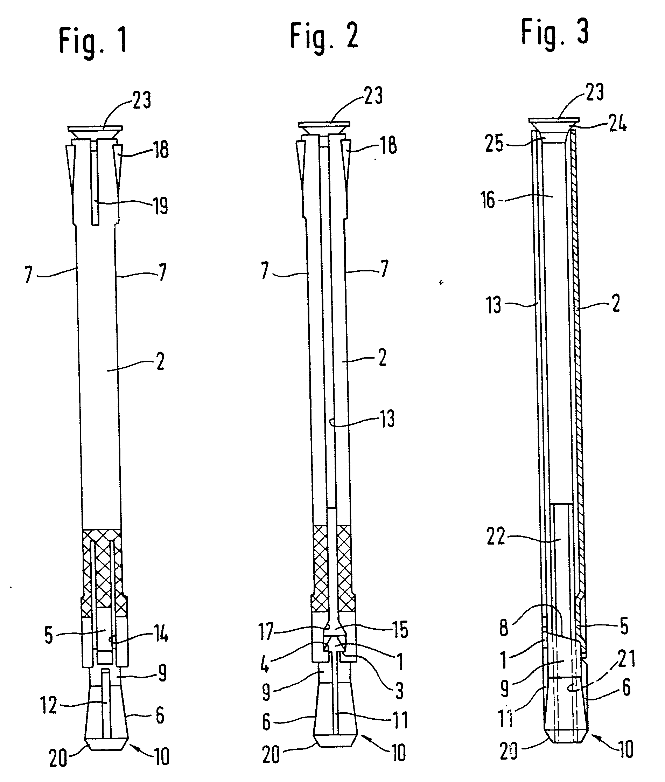

Fig. 1 und 2 senkrechten Mittelebene bei gleicher
Stellung der Teile.

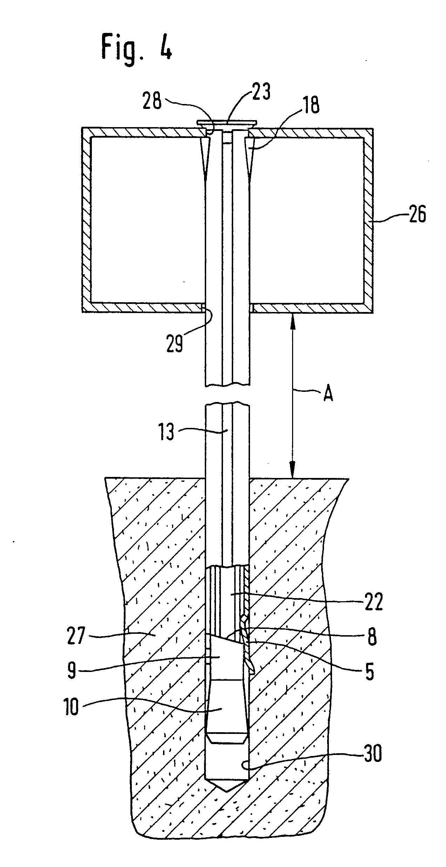

Fig. 4 zeigt als Anwendungsbeispiel einen Schnitt durch
eine Rahmenbefestigung bei in die Hülse eingezogenem Spreizkeil.

Bei dem gezeichneten Beispiel hat die Metallhülse 2, die aus
federndem Material besteht, an einer Seite einen durchgehenden
Längsschlitz 13, an ihrem Einsteckende einen dem durchgehenden
Schlitz 13 diametral gegenüberliegenden breiteren Schlitz 14
und - an ihrem rückwärtigen Ende - einen weiteren Schlitz 19.
Die Schlitze 14 und 19 erstrecken sich jeweils nur über einen
Teil der Länge der Hülse 2. In das Einsteckende der Hülse 2
ist ein im wesentlichen kegelstumpfförmiger Spreizkeil 10
eingesetzt, dessen Umfang die Spreizkegelfläche 6 bildet
und der vorzugsweise aus einer Metall-Legierung gespritzt
ist. An seinem äußersten freien Ende ist der Spreizkeil 10
mit einer der Verjüngung der Spreizkegelfläche 6 entgegengerichteten Verjüngung 20 versehen, die das Einführen des
Dübels in ein Loch, z.B. in einer gemauerten Wand, erleichtert.
Nach dem rückwärtigen Ende des Spreizkeils 10 hin schließt
sich an die Spreizkegelfläche 6 ein zylindrischer Hals 9 an,
der in die Hülse 2 paßt und sich um einen gewissen Betrag
in die Hülse hinein erstreckt, während er andererseits noch
aus der Hülse herausragt. Auf einander gegenüberliegenden Seiten des Spreizkeiles 10 erstrecken sich in axialer Richtung Führungsrippen 11 und 12, deren Höhe dem Außendurchmesser der Hülse 2 angepaßt ist. Die Stirnfläche 8 des Halses 9 des Spreizkeiles 10 verläuft geneigt zur Achse, und zwar bei dem gezeichneten
Beispiel unter etwa 15°. Der Hals ist daher auf seiner einen Seite länger oder höher als auf der gegenüberliegenden Seite, vgl. Fig. 3. Bei der in Fig. 1 bis 3 gezeichneten Stellung der Teile ragt die Führungsrippe 11, die länger und schmaler ist als die Führungsrippe 12 und sich auf der längeren Seite des Halses 9 befindet, in den durchgehenden Schlitz 13 hinein, während sich die kürzere und breitere Führungsrippe 12 noch vor dem Eingang des breiteren und kürzeren Schlitzes 14 der Hülse 2 befindet. In Fortsetzung der Rippe 11 befindet sich auf dem Umfang des Halses 9 eine bei dem gezeichneten Beispiel in Ansicht im wesentlichen dreieckförmige Haltenase 1, vgl. Fig. 2. Während der Außendurchmesser des Halses 9 dem Innendurchmesser der Hülse 2 etwa entspricht, bildet die Haltenase 1 einen Ansatz von der Dicke der Wandstärke der Hülse 2.

Bei dem gezeichneten Beispiel ist das Nasendreieck etwa gleichseitig; die Grundlinie des Dreiecks verläuft in Richtung des Halsumfanges und die Dreieckspitze ist nach dem rückwärtigen Dübelende hin gerichtet.

In dem den Hals 9 des Spreizkeils 10 aufnehmenden, also vorderen Ende der Metallhülse 2 ist eine die Haltenase 1 aufnehmende Aussparung 15 vorgesehen. Die Aussparung 15 liegt bei dem gezeichneten Beispiel in dem durchgehenden Längsschlitz 13. Die der Dreiecksgrundlinie entsprechende Basis 3 der Haltenase 1 reicht nach beiden Seiten hin über die Breite der Führungsrippe 11 hinaus und liegt mit diesen Verbreiterungen auf in der Aussparung 15 gebildeten Auflageflächen 4 auf, wenn sich der Spreizkeil 10 in seiner in den Fig. 1 bis 3 gezeichneten äußersten Stellung befindet.

Die Aussparung 15 ist höher als die Haltenase 1 und der zylindrische Hals des Spreizkeils 10 ragt bei einer in Fig. 1 bis 3 gezeichneten äußersten Lage um mindestens den Betrag aus der Hülse 2 heraus, um den die Aussparung höher ist als die Haltenase. An ihrem rückwärtigen Ende, wo sie in den durchgehenden Schlitz 13 übergeht, ist die Aussparung 15 durch Schrägflächen 17 begrenzt, deren Neigung derjenigen der Dreieckseiten der Haltenase 1 entspricht.

Durch den Spreizkeil 10 geht eine axiale Gewindebohrung 21 hindurch, in welche der das dazu passende Gewinde tragende Abschnitt 22 des Gewindebolzens 16 eingeschraubt ist. Der Bolzen 16 hat einen Kopf 23, der mit einem Kegelstumpf 24 von etwa 45° Neigung und einem steileren Kegelstumpf 25 in den Schaftteil des Bolzens 16 übergeht. Der Kegel 24 liegt an der Stirnflächenkante des rückwärtigen Endes der Hülse 2 an.

Auf der dem durchgehenden Längsschlitz 13 gegenüberliegenden Seite der Hülse 2 ist aus deren Mantel an ihrem Vorderende eine ausspreizbare Drehsperr-Zunge 5 ausgeschnitten, die innerhalb des dem Schlitz 13 gegenüberliegenden kurzen Schlitzes 14 liegt und deren rückwärtiges Ende mit dem Mantel der Hülse 2 aus einem Stück besteht. Das Vorderende der Drehsperr-Zunge 5 reicht bis vor den Hals 9 des Spreizkeils 10, wenn sich dieser in der Stellung nach Fig. 1 bis 3 befindet. Die Drehsperr-Zunge 5 ist bis zum Übergreifen der Stirnfläche 8 des Halses 9 des Spreizkeils 10 bei dessen Stellung nach Fig. 1 bis 3 in das Innere der Hülse 2 eingebogen; die übergriffene Kante der Stirnfläche 8 ist in einer der Breite der Drehsperr-Zunge 5 entsprechenden Breite zweckmäßig abgerundet. Um 90° zu der Drehsperr-Zunge 5 nach beiden Seiten hin versetzt sind sich in Längsrichtung der Hülse 2 erstreckende Einprägungen 7 angeordnet, die in Längsrichtung an den von der Einbiegung der Drehsperr-Zunge 5 eingenommenen Bereich nach rückwärts anschließen und bis nahe an das rückwärtige Ende der Hülse 2 reichen. In geringem Abstand von diesem rückwärtigen Ende der Hülse 2 sind anschließend an die Längseinprägungen 7 an sich bekannte nach außen ragende Ausprägungen 18 vorgesehen.

Bei der Verwendung gemäß Fig. 4 ist der Dübel zum Befestigen eines ein im Querschnitt rechteckiges Hohlprofil darstellenden Fensterrahmens 26 in einem Abstand A vor der Oberfläche einer z.B. aus Mauerwerk bestehenden Wand 27 benutzt. Die in Fig. 4 oberen und unteren Wandungen des Rahmens 26 weisen Durchstecklöcher 28 und 29 auf, durch welche die Hülse 2 derart hindurchgesteckt ist, daß die in Fig. 4 obere Wandung 28 des Rahmens 26 auf den Ausprägungen 18 ruht.

In das in der Wand 27 vorgesehene Loch 30 wurde der Dübel in dem in Fig. 1 bis 3 gezeigten Zustand eingeschlagen. Durch Einschrauben des Gewindeabschnittes 22 vom Bolzenkopf 23 her wurde der Spreizkopf 10 in Achsrichtung in die Hülse 2 hineinbewegt, so daß zunächst sein Hals 9 die Drehsperr-Zunge 5 nach außen drückte. Bei weiterem Anziehen würde dann die Hülse 2 unter der Wirkung der Spreizkegelfläche 6 des Spreizkopfes 10 fest gegen die Wandung des Loches 28 oder in diese hineingepreßt werden. Um das Anziehen des Bolzens zu erleichtern, ist der Bolzenkopf 23 mit einem Innen-Vierkant oder Innen-Sechskant oder mit einem Innen-Vielzahnprofil ausgerüstet, das nach beendeter Montage auch den Haltezapfen einer Abdeckkappe aufnehmen kann.

Patentansprüche

1. Metallhülsen-Dübel für Abstandsmontage, nämlich zum Halten einer Wandung eines zu befestigenden Körpers in einem Abstand von der Oberfläche eines tragenden Körpers, insbesondere zum Befestigen von Tür- oder Fensterrahmen auf Mauerwerk, bestehend aus einer Metallhülse aus federndem Material, die einen durchgehenden Längsschlitz und an mindestens einem ihrer Enden einen diesem Längsschlitz diametral gegenüberliegenden, vom Hülsenende über einen Teil der Hülsenlänge sich erstreckenden zweiten Schlitz aufweist, einem an dem einen Ende in die Hülse einzusetzenden, sich mit zwei einander gegenüberliegenden, dem Hülsenumfang angepaßten Rippen in den Längsschlitzen der Hülse führenden, mit einer Gewindebohrung versehenen, im wesentlichen kegelstumpfförmigen Spreizkeil mit in die Hülse passendem zylindrischem Halsansatz und einem in diesen einzuschraubenden Gewindebolzen mit Senkschraubenkopf, dadurch gekennzeichnet, daß die Stirnfläche (8) des zylindrischen Halses (9) des Spreizkeils (10) abgeschrägt ist, daß an der Stelle der so gebildeten größten Halslänge eine Haltenase (1) aus der Halsfläche herausragend angebracht ist, und daß in dem den Hals (9) des Spreizkeils (10) aufnehmenden Ende der Metallhülse (2) eine die Haltenase (1) aufnehmende Aussparung (15) vorgesehen ist.

2. Dübel nach Anspruch 1, dadurch gekennzeichnet, daß die Stirnfläche (8) des Spreizkeils (10) um etwa 15$^{\circ}$ zur Achse geneigt ist.

3. Dübel nach Anspruch 1 oder 2, dadurch gekennzeichnet, daß die Haltenase (1) die eine (11) der auf dem Kegelstumpfmantel (6) des Spreizkeils (10) angeordneten Führungsrippen (11, 12) fortsetzt und nach beiden Seiten hin breiter ist als diese und mit ihren überstehenden Verbreiterungen auf in der in dem durchgehenden Längsschlitz (13) liegenden Aussparung (15) gebildeten Auflageflächen (4) aufliegt, wenn sich der Spreizkeil (10) in seiner äußersten Stellung befindet, in der er durch den Gewindebolzen (16) noch nicht in die Hülse (2), in die er aber mit seinem Hals (9) hineinragt, hineingezogen ist.

4. Dübel nach Anspruch 1 oder einem der folgenden, dadurch gekennzeichnet, daß die Aussparung (15) höher ist als die Haltenase (1) und daß der zylindrische Hals (9) des Spreizkeils (10) bei dessen äußerster Lage um mindestens den Betrag aus der Hülse (2) herausragt, um den die Aussparung (15) höher ist als die Haltenase (1).

5. Dübel nach Anspruch 1 oder einem der folgenden, dadurch gekennzeichnet, daß die Haltenase (1) in Ansicht im wesentlichen dreieckförmig ist, wobei die Grundlinie des Dreiecks in Richtung des Halsumfanges verläuft und die Dreieckspitze nach dem rückwärtigen Dübelende hin gerichtet ist.

6. Dübel nach Anspruch 3 bis 5, dadurch gekennzeichnet, daß die Aussparung (15) an ihrem rückwärtigen Ende, wo sie in den durchgehenden Schlitz (13) übergeht, durch Schrägflächen (17) begrenzt ist, deren Neigung derjenigen der Dreieckseiten der Haltenase (1) entspricht.

7. Dübel nach Anspruch 3 bis 6, dadurch gekennzeichnet, daß auf der dem durchgehenden Schlitz (13) gegenüberliegenden Seite der Hülse (2) aus deren Mantel an ihrem Vorderende eine ausspreizbare Drehsperr-Zunge (5) ausgeschnitten ist, die innerhalb des dem durchgehenden Schlitz (13) gegenüberliegenden kurzen Schlitzes (14) liegt und deren rückwärtiges Ende mit dem Mantel der Hülse (2) aus einem Stück besteht, während ihr Vorderende bis vor den Hals (9) des Spreizkeils (10) reicht, wenn sich dieser in seiner durch das Anliegen der

- 3 -                                    0019782

Haltenase (1) auf der Auflagefläche (4) der Aussparung (15)
bestimmten äußersten Stellung befindet.

8. Dübel nach Anspruch 7, dadurch gekennzeichnet, daß die
Drehsperr-Zunge (5) in das Innere der Hülse (2) bis zum
Übergreifen der Stirnfläche (8) des Halses (9) des Spreizkeils (10) bei dessen äußerster Stellung eingebogen ist.

9. Dübel nach Anspruch 7 und 8, dadurch gekennzeichnet, daß
um 90° zu der Drehsperr-Zunge (5) nach beiden Seiten hin
versetzt sich in Längsrichtung der Hülse erstreckende Einprägungen (7) angeordnet sind, die in Längsrichtung an den
von der Einbiegung der Drehsperr-Zunge (5) eingenommenen
Bereich nach rückwärts anschließen und bis nahe an das rückwärtige Ende der Hülse (2) reichen.

10. Dübel nach Anspruch 7 bis 9, dadurch gekennzeichnet, daß
in geringem Abstand vom rückwärtigen Ende der Hülse (2)
anschließend an die Längs-Einprägungen (7) an sich bekannte
nach außen ragende Ausprägungen (18) vorgesehen sind.

11. Dübel nach Anspruch 1 oder einem der folgenden, dadurch
gekennzeichnet, daß die auf der Spreizkegelfläche (6) des
Spreizkeils (10) einander gegenüberliegenden Führungsrippen (11,12) verschieden lang und verschieden breit sind, und
zwar die an der wegen der Schräglage der Stirnfläche (8)
des Spreizkeils (10) längeren Seite des Halses (9) liegende
Führungsrippe (11) länger und schmaler als die ihr auf der
kürzeren Seite des Halses (9) gegenüberliegende Führungsrippe (12).

0019782

Fig. 1

Fig. 2

Fig. 3

0019782

## Fig. 4